(19) Europäisches Patentamt
European Patent Office
Office européen des brevets

(11) EP 0 719 780 A1

(12) **EUROPEAN PATENT APPLICATION**

(43) Date of publication:
**03.07.1996 Bulletin 1996/27**

(51) Int. Cl.[6]: **C07F 9/165**, A01N 57/10

(21) Application number: **95119789.6**

(22) Date of filing: **15.12.1995**

(84) Designated Contracting States:
**BE CH DE DK ES FR GB IT LI NL**

(30) Priority: **28.12.1994 JP 337566/94**
**26.04.1995 JP 124599/95**

(71) Applicant: **NIHON BAYER AGROCHEM K.K.**
**Tokyo 108 (JP)**

(72) Inventors:
- **Maurer, Fritz, Dr.**
**Oyama-shi, Tochigi (JP)**
- **Otsu, Yuichi**
**Oyama-shi, Tochigi (JP)**
- **Hattori, Yumi**
**Yuki-shi, Ibaraki (JP)**
- **Obinata, Toru**
**Oyama-shi,Tochigi (JP)**

(74) Representative: **Linkenheil, Dieter et al**
**Bayer AG**
**Konzernverwaltung RP**
**Patente Konzern**
**51368 Leverkusen (DE)**

(54) **Organic Phosphoric acid ester derivatives**

(57) **Summary of the Invention**

Organic phosphoric acid ester derivatives of the formula

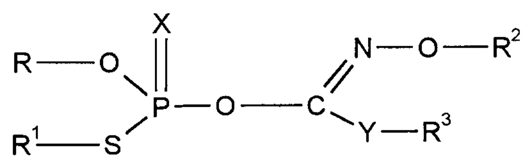

(I)

wherein

R represents alkyl,
$R^1$ represents alkyl,
$R^2$ represents alkyl, alkenyl or alkynyl,
$R^3$ represents alkyl or aryl,
X represents an oxygen atom or a sulfur atom and
Y represents an oxygen atom, a sulfur atom or $>N-R^4$,
in which
$R^4$ represents alkyl,

provided that in the case in which Y represents $>N-R^4$,
then $R^3$ represents alkyl,
and their use as insecticides and nematicides.



Printed by Rank Xerox (UK) Business Services
2.12.4/3.4

## Description

The present invention relates to novel organic phosphoric acid ester derivatives, to a process for their preparation and to their use as insecticides and nematicides.

It is already known that certain organic phosphoric acid ester derivatives possess insecticidal, termiticidal or nematicidal activity (see Japanese Patent Laid-Open Application (KOKAI) Nos. Sho 50-6724, Sho 52-33627 and Sho 63-33390).

There have been found novel organic phosphoric acid ester derivatives of the formula

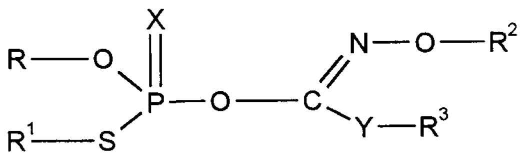

(I)

wherein

| | |
|---|---|
| R | represents alkyl, |
| $R^1$ | represents alkyl, |
| $R^2$ | represents alkyl, alkenyl or alkynyl, |
| $R^3$ | represents alkyl or aryl, |
| X | represents an oxygen atom or a sulfur atom and |
| Y | represents an oxygen atom, a sulfur atom or $>N-R^4$, in which |
| $R^4$ | represents alkyl, |

provided that in the case in which Y represents $>N-R^4$, then $R^3$ represents alkyl.

The novel organic phosphoric acid ester derivatives of the formula (I) are obtained by a process in which compounds of the formula

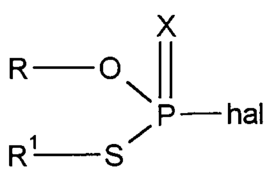

(II)

wherein
R, $R^1$ and X have the same meanings as given above, and

hal represents a leaving group, preferably chloro or bromo,

are reacted with compounds of the formula

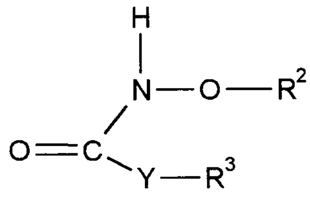

(III)

wherein
$R^2$, $R^3$ and Y have the same meanings as given above,
in the presence of the inert solvents, and if appropriate, in the presence of acid binders.

The novel organic phosphoric acid ester derivatives, according to the present invention, exhibit powerful insecticidal and nematicidal properties.

Surprisingly, the organic phosphoric acid ester derivatives, according to the invention, exhibit substantially greater insecticidal and nematicidal actions than those known from the prior art, for instance, the aforementioned Japanese Patent Laid-Open Application (KOKAI) Nos. Sho 50-6724, Sho 52-33627 and Sho 63-33390.

Among the organic phosphoric acid ester derivatives according to the invention of the formula (I), the preferred compounds are those in which

R represents $C_{1-8}$ alkyl,
$R^1$ represents $C_{1-8}$ alkyl,
$R^2$ represents $C_{1-8}$ alkyl, $C_{2-8}$ alkenyl or $C_{2-8}$ alkynyl,
$R^3$ represents $C_{1-8}$ alkyl or phenyl,
X represents an oxygen atom or a sulfur atom and
Y represents an oxygen atom, a sulfur atom or >N—$R^4$,
in which
$R^4$ represents $C_{1-8}$ alkyl,

provided that in the case in which Y represents >N—$R^4$,
then $R^3$ represents $C_{1-8}$ alkyl.

Very particularly preferred organic phosphoric acid ester derivatives according to the invention of the formula (I) are those in which

R represents $C_{1-4}$ alkyl,
$R^1$ represents $C_{1-4}$ alkyl,
$R^2$ represents $C_{1-4}$ alkyl, $C_{2-4}$ alkenyl or $C_{2-4}$ alkynyl,
$R^3$ represents $C_{1-4}$ alkyl or phenyl,
X represents an oxygen atom or a sulfur atom and
Y represents an oxygen atom, a sulfur atom or >N—$R^4$,
in which
$R^4$ represents $C_{1-4}$ alkyl,

provided that in the case in which Y represents >N—$R^4$,
then $R^3$ represents $C_{1-4}$ alkyl.

In the general formulae R represents preferably $C_1$-$C_8$-alkyl, particularly preferred $C_1$-$C_4$-alkyl and very particularly preferred methyl or ethyl (preferably ethyl).

In the general formulae $R^1$ represents preferably $C_1$-$C_8$-alkyl, particularly preferred $C_1$-$C_4$-alkyl and very particularly preferred $C_3$ to $C_4$-alkyl (preferably n-propyl and sec.-butyl).

In the general formulae $R^2$ represents preferably $C_1$-$C_8$-alkyl, $C_2$-$C_8$-alkenyl or $C_2$-$C_8$-alkynyl, particularly preferred $C_1$-$C_4$-alkyl, $C_2$-$C_4$-alkenyl or $C_2$-$C_4$-alkynyl, and very particularly preferred methyl, ethyl, n-propyl, allyl or propargyl (preferably methyl, ethyl or allyl).

In the general formulae $R^3$ represents preferably $C_1$-$C_8$-alkyl or phenyl, particularly preferred $C_1$-$C_4$-alkyl or phenyl and very particularly preferred methyl, ethyl, i-butyl or phenyl.

In the general formulae X represents oxygen or sulfur, preferably oxygen.

In the general formulae Y represents preferably oxygen or sulfur or >N-$C_1$-$C_8$-alkyl ($R^4$ represents $C_{1-8}$ alkyl), particularly preferred oxygen or sulfur (preferably oxygen) or >N-$C_1$-$C_4$-alkyl($R^4$ represents $C_{1-4}$ alkyl), and very particularly preferred oxygen, sulfur or >N-$CH_3$ ($R^4$ represents $CH_3$), >N-$C_2H_5$ (R represents $C_2H_5$) , preferably oxygen.

If O-ethyl-S-sec.-butyl-thiophosphoric chloride and methoxycarbamic acid methyl ester, for example, are used as starting materials in the above-mentioned preparation process, the preparation process is expressed by the following reaction formula:

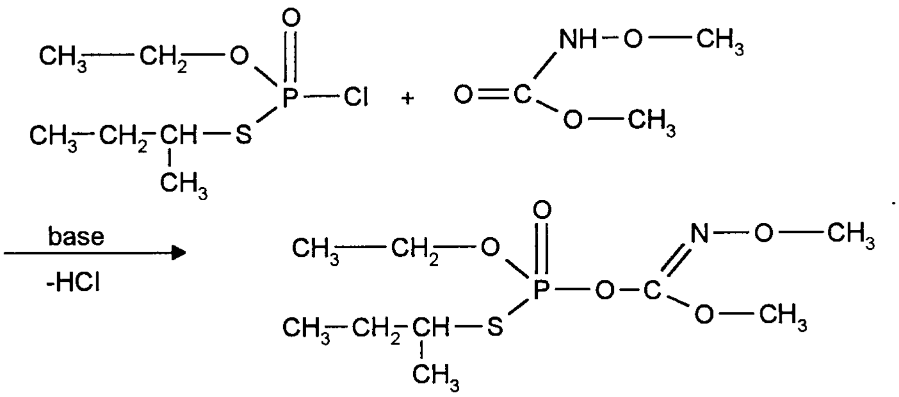


With reference to the above-mentioned preparation process, compounds of formula (II) as starting materials are known compounds which are described in the above-cited Japanese Patent Laid-Open Application (KOKAI) Sho 63-33390 and so on.

As typical examples of compounds of formula (II), mention can be made of the following compounds:
O-methyl-S-sec.-butyl-thiophosphoric chloride,
O-ethyl-S-sec.butyl-thiophosphoric chloride,
O-ethyl-S-n-propyl-thiophosphoric chloride,
O-ethyl-S-n-propyl-dithiophosphoric chloride,
O-n-propyl-S-sec.butyl-thiophosphoric acid and
O,S-di-n-propyl-thiophosphoric acid.

With reference to the above-mentioned preparation process, compounds of formula (III) as starting compounds are well-known compounds in the field of organic chemistry, and as their examples, mention can be made of the following compounds:
methoxycarbamic acid methyl ester,
methoxycarbamic acid phenyl ester,
methoxycarbamic acid isobutyl ester,
methoxycarbamic acid sec.-butyl ester,
2-propenoxycarbamic acid ethyl ester,
ethoxycarbamic acid ethyl ester,
ethoxycarbamic acid methyl ester,
propoxycarbamic acid methyl ester,
isopropoxycarbamic acid methyl ester and
methoxycarbamic acid ethyl ester.

The above-mentioned preparation process can be carried out by reacting a compound of formula (II) with a compound of formula (III), usually in a reaction-inert organic solvent. As inert organic solvents which can be used in the reaction, mention can be made of aliphatic, cycloaliphatic and aromatic hydrocarbons which are optionally chlorinated, for example, pentane, hexane, cyclohexane, petroleum ether, ligroin, benzene, toluene, xylene, dichloromethane, chloroform, carbon tetrachloride, 1,2-dichloroethane, chlorobenzene, dichlorobenzene, etc.; ethers, for example, ethyl ether, methyl ethyl ether, isopropyl ether, butyl ether, dioxane, dimethoxyethane (DME), tetrahydrofuran (THF), diethylene glycol dimethyl ether (DGM), etc.; ketones, for example, acetone, methyl ethyl ketone (MEK), methyl isopropyl ketone, methyl isobutyl ketone (MIBK), etc.; nitriles, for example, acetonitrile, propionitrile, acrylonitrile, etc.; acid amides, for example, dimethyl formamide, (DMF), dimethyl acetamide (DMA), N-methylpyrrolidone, 1,3-dimethyl-2-imidazolidinone, hexamethylphosphoric triamide (HMPA), etc.; sulfones and sulfoxides, for example, dimethyl sulfoxide (DMSO), sulfolane, etc.; and bases, for example, pyridine, etc.

The above-mentioned reaction can be carried out in the presence of an acid-binding agent, and as examples of such acid-binding agents, mention can be made of alkali metal hydroxides, carbonates and bicarbonates and so on, as

inorganic bases, for example, sodium hydrogencarbonate, potassium hydrogencarbonate, sodium carbonate, potassium carbonate, lithium hydroxide, sodium hydroxide, potassium hydroxide and calcium hydroxide.

As organic bases, mention can be made of alcoholates, tertiary amines, dialkylaminoanilines and pyridines, for example, triethylamine, 1,1,4,4-tetramethylethylenediamine (TMEDA), N,N-dimethylaniline, N,N-diethylaniline, pyridine, 4-dimethylaminopyridine (DMAP), 1,4-diazabicyclo[2.2.2]octane (DABCO) and 1,8-diazabicyclo[5.4.0]undec-7-ene (DBU) and so on.

The above-mentioned reaction can be carried out within a substantially wide range of temperature. It can be effected generally between about -10°C and about 120°C and preferably between about 0°C and about 50°C. The reaction is carried out preferably under normal pressure, but the operation can also be made under elevated pressure or reduced pressure.

In carrying out the process according to the invention, the desired compounds of the formula (I) can be obtained by reacting 1 to 1.1 mol amount of the compounds of the formula (III) in a diluent such as tetrahydrofuran, with 1 mol of the compounds of the formula (II) in the presence of acid binder such as potassium t-butoxide.

The active compounds according to the present invention are well tolerated by plants, have a favorable level of toxicity to warm-blooded animals, and can be used for combating of nematodes and arthropod pests, especially nematodes and insects which are encountered in agriculture, in forestry, and for combating insects in the protection of stored products and of materials, and in the hygiene field.

They are active against normally sensitive and resistant species and against all or some stages of development. The above-mentioned pests include:

from the class of the Isopoda, for example, Oniscus Asellus, Armadillidium vulgareand Porcellio scaber;
from the class of the Diplopoda, for example, Blaniulus guttulatus;
from the class of the Chilopoda, for example, Geophilus carpophagus and Scutigeraspec;
from the class of the Symphyla, for example, Scutigerella immaculata;
from the order of the Thysanura, for example, Lepisma saccharina;
from the order of the Collembola, for example, Onychiurus armatus;
from the order of the Orthoptera; for example, Blatta orientalis, Periplaneta americana, Leucophaea maderae, Blattella germanica, Acheta domesticus, Gryllotalpa spp., Locusta migrato ria migratorioides, Melanoplus differentialis and Schistocerca gregaria;
from the order of the Dermaptera, for example, Forficula auricularia;
from the order of the Isoptera, for example, Reticulitermes spp.;
from the order of the Anoplura, for example, Phylloxera vastatrix, Pemphigus spp., Pediculus humanus corporis, Haematopinus spp. and Linognathus spp.;
from the order of the Mallophaga, for example, Trichodectes spp. and Damalinea spp.;
from the order of the Thysanoptera, for example, Hercinothrips femoralis and Thrips tabaci;
from the order of the Heteroptera, for example, Eurygaster spp., Dysdercus intermedius, Piesma guadrata, Cimex lectularius, Rhodniusprolixus and Triatoma spp.;
from the order of the Homoptera, for example, Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. and Psylla spp.;
from the order of the Lepidoptera, for example, Pectinophora gossypiella, Bupalus piniarius, Cheimatobia brumata, Lithocolletis blancardella, Hyponomeuta padella, Plutella maculipennis, Malacosoma eustria, Euproctis chrysorrhoea, Lymantria spp., Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia knehniella, Galleria mellonella, Cacoecia podana, Capua reticulana, Choristoneura fumiferana, Clysia ambiguella, Homona magnanima and Tortrix viridana;
from the order of the Coleoptera, for example, Anobium punctatum, Rhizopertha dominica, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis and Costelytra zealandica;
from the order of the Hymenoptera, for example, Diprion spp., Hoplocampa spp., Lasius spp., Monomorium pharaonis and Vespa spp.;
from the order of the Diptera, for example, Aedes spp., Anopheles spp., Culex spp., Drosophila melanogaster, Musca spp., Fannia spp., Calliphora erythrocephala, Lucilia spp., Chrysomyia spp., Cuterebra sp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae and Tipula paludos.

The plant-parasitic nematodes include Pratylenchus spp., Radopholus similis, Ditylenchus dipsaci, Tylenchulus semipenetrans, heterodera spp., Meloidogyne spp., Aphelenchoides spp., Longidorus spp., Xiphinema spp., and Trichodorus spp.

The active compounds according to the present invention can be converted into the customary formulations, such as solutions, emulsions, wettable powders, suspensions, powders, foams, pastes, granules, aerosols, tablets, natural and synthetic materials impregnated with active compound, very fine capsules in polymeric substances, coating compositions for use on seed, and formulations used with burning equipment, such as fumigating cartridges, fumigating cans and fumigating coils, as well as ULV cold mist and warm mist formulations.

These formulations may be produced in known manner, for example by mixing the active compounds with extenders, that is to say liquid or liquefied gaseous or solid diluents or carriers, optionally with the use of surface-active agents, that is to say emulsifying agents and/or dispersing agents and/or foam-forming agents. In the case of the use of water as an extender, organic solvents can, for example, also be used as auxiliary solvents.

As liquid solvents diluents or carriers, there are suitable in the main, aromatic hydrocarbons, such as xylene, toluene or alkyl naphthalenes, chlorinated aromatic or chlorinated aliphatic hydrocarbons, such as chlorobenzenes, chloroethylenes or methylene chloride, aliphatic hydrocarbons, such as cyclohexane or paraffins, for example mineral oil fractions, alcohols, such as butanol or glycol as well as their ethers and esters, ketones, such as acetone, methyl ethyl ketone, methyl isobutyl ketone or cyclohexanone, or strongly polar solvents, such as dimethylformamide and dimethyl-sulphoxide, as well as water.

By liquefied gaseous diluents or carriers are meant liquids which would be gaseous at normal temperature and under normal pressure, for example aerosol propellants, such as halogenated hydrocarbons as well as butane, propane, nitrogen and carbon dioxide.

As solid carriers there may be used ground natural minerals, such as kaolins, clays, talc, chalk, quartz, attapulgite, montmorillonite or diatomaceous earth, and ground synthetic minerals, such as highly-dispersed silicic acid, alumina and silicates. As solid carriers for granules there may be used crushed and fractionated natural rocks such as calcite, marble, pumice, sepiolite and dolomite, as well as synthetic granules of inorganic and organic meals, and granules of organic material such as sawdust, coconut shells, maize cobs and tobacco stalks.

As emulsifying and/or foam-forming agents there may be used non-ionic and anionic emulsifiers, such as polyoxyethylene-fatty acid esters, polyoxyethylene-fatty alcohol ethers, for example alkylaryl polyglycol ethers, alkyl sulphonates, alkyl sulphates, aryl sulphonates as well as albumin hydrolysis products. Dispersing agents include, for example, lignin sulphite waste liquors and methylcellulose.

Adhesives such as carboxymethylcellulose and natural and synthetic polymers in the form of powders, granules or latices, such as gum arabic, polyvinyl alcohol and polyvinyl acetate, can be used in the formulation.

It is possible to use colorants such as inorganic pigments, for example iron oxide, titanium oxide and Prussian Blue, and organic dyestuffs, such as alizarin dyestuffs, azo dyestuffs or metal phthalocyanine dyestuffs, and trace nutrients, such as salts or iron, manganese boron, copper, cobalt, molybdenum and zinc.

The formulations in general contain from 0.1 to 95 per cent by weight of active compound, preferably from 0.5 to 90 per cent by weight.

The active compounds according to the present invention can be present in their commercially available formulations and in the use forms, prepared from these formulations, as a mixture with other active compounds, such as insecticides, baits, sterilising agents, acaricides, nematicides, fungicides, growth-regulating substances or herbicides. The insecticides include, for example, phosphates, carbamates, carboxylates, chlorinated hydrocarbons, phenylureas, substances produced by microorganisms.

The active compounds according to the present invention can furthermore be present in their commercially available formulations and in the use forms, prepared from these formulations, as a mixture with synergistic agents. Synergistic agents are compounds which increase the action of the active compounds, without it being necessary for the synergistic agent added to be active itself.

The active compound of the present invention content of the use forms prepared from the commercially available formulations can vary within wide limits. The active compound concentration of the use forms can be from 0.0000001 to 100% by weight of active compound, preferably between 0.0001 and 1% by weight.

The active compounds according to the invention are employed in a customary manner appropriate for the use forms.

When used against hygiene pests and pests of stored products, the active compounds according to the invention are distinguished by an excellent residual action on wood and clay as well as a good stability to alkali on limed substrates:

The following Examples illustrate the present invention more specifically. It should be understood however that the invention is in no way limited to these examples alone.

**Synthesis Examples**

**Example 1**

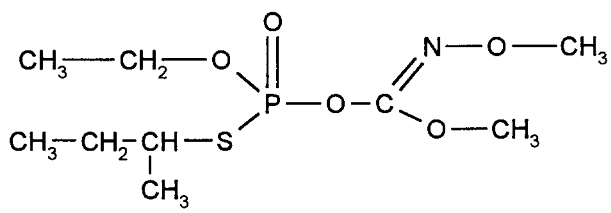

Potassium tert.-butoxide (6.5 g) dissolved in tetrahydrofuran (80 ml) is added to a solution (10 ml) of methoxycarbamic acid methyl ester (5.5 g) in tetrahydrofuran at a temperature 0 to 5°C. To the reaction solution is added O-ethyl-S-sec.-butyl-thiophosphoric chloride (11.3 g). During this addition, the temperature of 0 to 5°C is maintained. After further 3-hour stirring at room temperature, the solvent is distilled off under reduced pressure, and then water (100 ml) is added and extraction with ether (75 ml) is carried out twice. The organic phase is dried over anhydrous sodium sulfate and the solvent is distilled off. The residue is distilled under reduced pressure (boiling point 108-110/0.2 mmHg) to give O-ethyl-O-(methoxy-(N-methoxyimino)-carbonyl)-S-sec.-butyl-thiophosphoric acid ester (9.2 g) which is colorless and oily.

The compounds which may be obtained by the same method as Example 1, are shown in the following Table 1.

**Table 1**

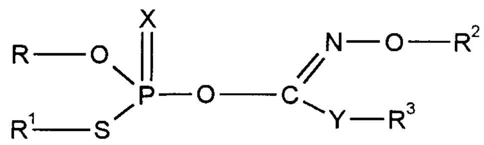

| Compound No. | R | $R^1$ | $R^2$ | $R^3$ | X | Y | Refractive index ($n_D^{20}$) |
|---|---|---|---|---|---|---|---|
| 2 | ethyl | sec-butyl | methyl | isobutyl | O | O | 1.4700 |
| 3 | ethyl | n-propyl | methyl | isobutyl | O | O | 1.4681 |
| 4 | ethyl | n-propyl | methyl | phenyl | O | O | 1.5209 |
| 5 | ethyl | n-propyl | methyl | methyl | O | O | 1.4748 |
| 6 | ethyl | n-propyl | methyl | methyl | S | O | 1.5125 |
| 7 | ethyl | sec-butyl | allyl | ethyl | O | O | 1.4699 |
| 8 | ethyl | sec-butyl | n-propyl | ethyl | O | O | |
| 9 | ethyl | sec-butyl | methyl | methyl | O | S | |
| 10 | ethyl | n-propyl | methyl | methyl | O | S | |
| 11 | ethyl | sec-butyl | methyl | methyl | O | N-methyl | |
| 12 | ethyl | sec-butyl | methyl | ethyl | O | N-ethyl | |
| 13 | ethyl | n-propyl | methyl | ethyl | O | N-ethyl | |
| 14 | ethyl | n-propyl | methyl | methyl | O | N-methyl | |
| 15 | ethyl | sec-butyl | propargyl | ethyl | O | O | |
| 16 | ethyl | n-propyl | methyl | ethyl | O | O | |
| 17 | ethyl | sec-butyl | methyl | ethyl | O | O | |
| 18 | ethyl | sec-butyl | methyl | ethyl | O | S | 1.5049 |
| 19 | ethyl | n-propyl | methyl | ethyl | O | S | 1.5140 |
| 20 | ethyl | sec-butyl | ethyl | methyl | O | O | |
| 21 | ethyl | sec-butyl | ethyl | ethyl | O | O | |
| 22 | ethyl | n-propyl | ethyl | methyl | O | O | |
| 23 | ethyl | n-propyl | ethyl | ethyl | O | O | |

**Biotest Example 1** (Test on Spodoptera litura larvae)

**Preparation of test formulations**

Solvent : Xylol 3 parts by weight
Emulsifier : Polyoxyethylene alkyl phenyl ether 1 part by weight

To prepare a formulation of an appropriate active compound, 1 part by weight of the active compound was mixed with the above-given amount of the solvent containing the above-given amount of the emulsifier, and the mixture was diluted with water to a given concentration.

**Test method**

Cabbage leaves were immersed in an aqueous active compound solution having a given concentration and, after the air drying of the solution, they were placed in a petri dish having a diameter of 9 cm. Ten 3rd-instar Spodoptera litura larvae were introduced into the petri dish, and the petri dish was placed in a room controlled at a constant temperature of 25°C. After 7 days, the number of dead pests was counted, and the insecticidal percentage was calculated. The test was made in three series, and insecticidal percentage for each test is given with the average value. The results are shown in Table 2.

Table 2

| Compound No. | Concentration (ppm) | Insecticidal percentage (%) |
|---|---|---|
| 1 | 200 | 100 |
| 2 | 200 | 100 |
| 3 | 200 | 100 |
| 4 | 200 | 100 |
| 5 | 200 | 100 |
| 6 | 200 | 100 |
| 7 | 200 | 100 |

**Biotest Example 2** (Test on nematodes)

**Preparation of test formulations**

One part by weight of an active compound was dissolved in 30 parts by weight of acetone. After the active compound solution in acetone was added to 100 parts by weight of Ishikawa-lite and the latter was impregnated therewith, the acetone was volatilized to give a 1% fine granule formulation of the active compound.

**Test method**

Soil which had been infested with soybean cyst nematodes was weighed and placed in a vinyl bag. The above-mentioned fine granule formulation was added to the infested soil in such an amount that a given concentration of the formulation was obtained, and then sufficiently mixed therewith. The resulting mixture was transferred to a pot.

In the test of soybean cyst nematodes, No. 5 (about 15 cm) pots were used and 10 seeds of soybean (variety: Tachisuzunari) were sown per pot. They were grown for 40 days in a greenhouse. Then, the soybean plants were drawn out from the pots. The viable stocks were observed in respect to their root parts and each of the stocks was rated in terms of cyst indices.

Index

0: There is no cyst.
1: There are 1 to 3 cysts in the whole roots.

2: There are several cysts. The cysts exist apart.

3: There are cysts throughout the roots.

4: Growth inhibition occurs. Cysts exist densely throughout the whole roots.

$$\text{Degree of damage} = \frac{(0 \times n^0 + 1 \times n^1 + 2 \times n^2 + 4 \times n^3 + 8 \times n^4)}{((n^0 + n^1 + n^2 + n^3 + n^4) \times 8)}$$

wherein

$n^0$: the number of stocks having index 0,
$n^1$: the number of stocks having index 1,
$n^2$: the number of stocks having index 2,
$n^3$: the number of stocks having index 3 and
$n^4$: the number of stocks having index 4.

$$\text{Control value} = (1 - \frac{\text{the degree of damage in the treated zone}}{\text{the degree of damage in the untreated zone}}) \times 100$$

The test was made twice and the results are expressed on the average. The results are shown in the following Table 3:

Table 3

| Compound No. | Concentration (kg a.I./ha) | Control value (%) |
|---|---|---|
| 1 | 10 | 100 |
| 2 | 10 | 100 |
| 3 | 10 | 100 |
| 4 | 10 | 100 |
| 5 | 10 | 100 |
| 6 | 10 | 100 |
| 7 | 10 | 100 |

**Formulation Example 1** (Granule formulation)

Water (25 parts) is added to a mixture of compound No. 3 according to the invention (10 parts), bentonite (montmorillonite) (30 parts), talc (58 parts) and lignin sulfonate (2 parts). The resulting mixture is well kneaded and formed into 10 - 40 mesh granules by means of an extrusion granulator, and the granules are dried at 40 - 50°C to give a granule formulation.

**Formulation Example 2** (Granule formulation)

Clay mineral granules (95 parts) having a granule size distribution of 0.2 - 2 mm are placed in a rotary mixer. Under rotation, the granules are sprayed and wetted uniformly with compound No. 7 according to the invention (5 parts) together with a liquid diluent, and then they are dried at 40 - 50°C to give a granule formulation.

**Formulation Example 3** (Emulsifiable concentrate formulation)

Compound No. 1 according to the invention (30 parts), xylene (5 parts), polyoxyethylene alkyl phenyl ether (8 parts) and calcium alkylbenzene sulfonate (7 parts) are mixed and stirred together to give an emulsifiable concentrate formulation.

**<u>Formulation Example 4</u>** (Wettable powder formulation)

Compound No. 1 according to the invention (15 parts), a mixture of white carbon (fine powder of hydrous, non-crystalline silicon oxide) with powdered clay (1:5) (80 parts), sodium alkylbenzene sulfonate (2 parts) and sodium alkylnaphthalene sulfonate/formalin polymerisate (3 parts) are powder-mixed together to give a wettable powder formulation.

**<u>Formulation Example 5</u>** (Wettable granule formulation)

Compound No. 2 according to the invention (20 parts), sodium lignin sulfonate (30 parts), bentonite (15 parts) and calcined diatomaceous earth powder (35 parts) are sufficiently mixed together, and water is added to the mixture. The resulting mixture is extruded through a 0.3 mm-screen and dried to give a wettable granule formulation.

**Claims**

**1.** Organic phosphoric acid ester derivatives of the formula

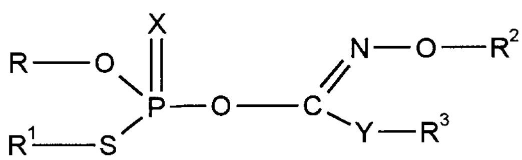

(I)

wherein

R represents alkyl,
$R^1$ represents alkyl,
$R^2$ represents alkyl, alkenyl or alkynyl,
$R^3$ represents alkyl or aryl,
X represents an oxygen atom or a sulfur atom and
Y represents an oxygen atom, a sulfur atom or >N—$R^4$, in which
$R^4$ represents alkyl,

provided that in the case in which Y represents >N—$R^4$, then $R^3$ represents alkyl.

**2.** The compounds according to claim 1 wherein

R represents $C_{1-8}$ alkyl,
$R^1$ represents $C_{1-8}$ alkyl,
$R^2$ represents $C_{1-8}$ alkyl, $C_{2-8}$ alkenyl or $C_{2-8}$ alkynyl,
$R^3$ represents $C_{1-8}$ alkyl or phenyl,
X represents an oxygen atom or a sulfur atom and
Y represents an oxygen atom, a sulfur atom or >N—$R^4$, in which
$R^4$ represents $C_{1-8}$ alkyl,

provided that in the case in which Y represents >N—$R^4$, then R represents $C_{1-8}$ alkyl.

**3.** The compounds according to claim 1 wherein

R represents $C_{1-4}$ alkyl,
$R^1$ represents $C_{1-4}$ alkyl,
$R^2$ represents $C_{1-4}$ alkyl, $C_{2-4}$ alkenyl or $C_{2-4}$ alkynyl,
$R^3$ represents $C_{1-4}$ alkyl or phenyl,

X represents an oxygen atom, a sulfur atom and
Y represents an oxygen atom, a sulfur atom or >N—$R^4$, in which
$R^4$ represents $C_{1-4}$ alkyl,

provided that in the case in which Y represents >N—$R^4$, then R represents $C_{1-4}$ alkyl.

**4.** O-ethyl-O-(methoxy-(N-methoxyimino)-carbonyl)-S-sec.-butyl-thiophosphoric acid ester according to claim 1 which is represented by the formula

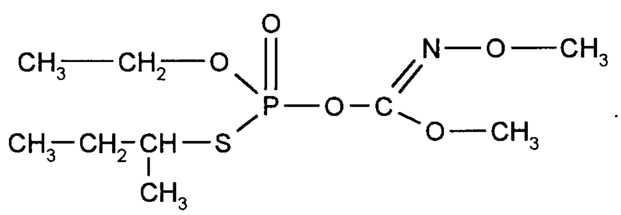

**5.** Process for the preparation of organic phosphoric acid ester derivatives of the formula (I)

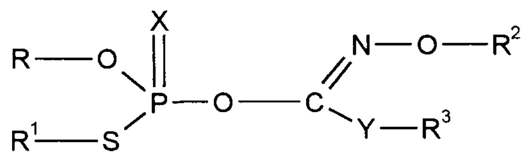

(I)

wherein

R represents alkyl,
$R^1$ represents alkyl,
$R^2$ represents alkyl, alkenyl or alkynyl,
$R^3$ represents alkyl or aryl,
X represents an oxygen atom or a sulfur atom and
Y represents an oxygen atom, a sulfur atom or >N—$R^4$, in which
$R^4$ represents alkyl,

provided that in the case in which Y represents >N—$R^4$, then $R^3$ represents alkyl, characterized in that compound of the formula

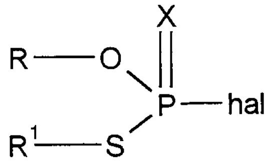

(II)

wherein
R, $R^1$ and X have the same meanings as given above, and

hal represents a leaving group preferably chloro or bromo,

are reacted with compounds of the formula

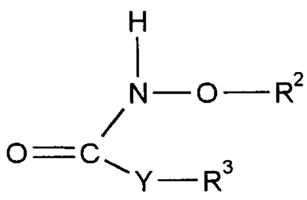

(III)

wherein
$R^2$, $R^3$ and Y have the same meanings as given above,
in the presence of the inert solvents, and if appropriate, in the presence of acid binders.

**6.** Insecticidal and nematicidal compositions, characterized in that they contain at least one organic phosphoric acid ester derivative of the formula (I) according to claim 1.

**7.** Process for combating insects and nematodes, characterized in that organic phosphoric acid ester derivatives of the formula (I) according to claim 1 are allowed to act on insects and nematodes and/or their habitat.

**8.** Use of organic phosphoric acid ester derivatives of the formula (I) according to claim 1 for combating insects and nematodes.

**9.** Process for preparation of insecticidal and nematicidal compositions, characterized in that organic phosphoric acid ester derivatives of the formula (I) according to claim 1 are mixed with extenders and/or surface-active agents.

European Patent Office

# EUROPEAN SEARCH REPORT

Application Number
EP 95 11 9789

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | CHEMICAL ABSTRACTS, vol. 109, no. 23, 5 December 1988 Columbus, Ohio, US; abstract no. 211223, OYAMA H ET AL 'Preparation of O,S-dialkyl-O'-imido carbonyl-dithiophosphates as insecticides, acaricides, and nematocides' * abstract * & JP-A-08 833 390 (HOKKO CHEMICAL INDUSTRY CO., LTD.;JAPAN) 13 February 1988 | 1-9 | C07F9/165<br>A01N57/10 |
| A | FR-A-2 013 567 (VELSICOL CHEMICAL CORPORATION) * the whole document * | 1-9 | |
| P,A | DE-A-43 34 196 (BAYER AG) * the whole document * | 1-9 | |

TECHNICAL FIELDS SEARCHED (Int.Cl.6)
C07F
A01N

The present search report has been drawn up for all claims

| Place of search | Date of completion of the search | Examiner |
|---|---|---|
| THE HAGUE | 26 March 1996 | Beslier, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)